# EUROPEAN PATENT APPLICATION

(11) **EP 3 372 402 A1**
(43) Date of publication of application: **12.09.2018**
(21) Application number: 18160596.5
(22) Date of filing: 07.03.2018
(51) Int. Cl.: B32B 27/08, B32B 27/18, B32B 27/22, B32B 27/30, B32B 27/36

(54) **A POLYMERIC MATERIAL AND A CONTAINER MANUFACTURED THEREWITH**

(30) Priority: 08.03.2017 IT 201700025498
(71) Applicant: Kuvera S.p.A., 80121 Napoli (NA) (IT)
(72) Inventor: COSTA, Francesco, 80121 Napoli (NA) (IT); CIRELLA, Diletta, 80121 Napoli (NA) (IT); PERROTTI, Marta, 80121 Napoli (NA) (IT)
(74) Representative: Lualdi, Lorenzo

(57) **Abstract**

The present description relates to a coextruded polymeric material, usable in particular for the manufacture of containers with high structural strength. More specifically, the invention relates to the technical sector of travel accessories and in particular a luggage item of the type that has a hard shell.

In a general embodiment, the present invention relates to a coextruded multilayer composite material, comprising at least one superficial layer (A) of polycarbonate (PC) and at least one inner layer (B) made of a mixture of acrylonitrile butadiene styrene (ABS) and polycarbonate comprising a plasticiser.

The invention further relates to items, in particular luggage articles, fabricated with said material.

## Description

The present description relates to a coextruded polymeric material, usable in particular for the manufacture of containers with high structural strength. More specifically, the invention relates to the technical sector of travel accessories and in particular a luggage item of the type that has a hard shell.

A particularly widely used type of luggage items consists of suitcases with hard shell, be they of the traditional or trolley type.

The shell, typically made of plastic material, provides more protection to the content of the suitcase and at the same time it is less subject to wear than suitcases made of fabric or natural or synthetic leather.

In particular, hard shell suitcases are recommended for air travel. It is well known that, in the operations of loading/unloading and re-delivery of the luggage, the luggage is thrown about and undergoes impacts against hard surfaces or sharp edges and it can suffer damages. Hard shell suitcases have been proven to be effective in minimising damages to the content of the suitcase itself.

It is thus evident that there is a widely felt need to make available a material for the manufacture of said shell that has high resistance properties, in particular resistance to the impacts to which a suitcase may be subject when in use.

A purpose of the present invention is to make available a polymeric material suitable for the manufacture of containers, in particular luggage items, characterised by high impact resistance and at the same time by low cost.

An object of the present invention then is a material as defined in general in claim 1 and more particularly in the claims from 2 to 9, whose text is an integral part of the present description.

An additional object of the present invention is a container as defined in claim 11, having a hard shell made with the material of the claims from 1 to 9.

Another object of the invention is a luggage item with hard shell as defined in claim 12, wherein the shell is made of the material of the claims from 1 to 9.

Yet another object of the invention is a method for manufacturing the material of the invention in the form of plates, as defined in the claims from 14 to 19.

The material of the invention can also be used in sectors other than luggage, in applications that require high impact resistance, for example in the automotive sector or more generally in means of transportation.

An object of the invention will then be an item manufactured with the material according to the claim from 1 to 9 wherein said item is a part of a transportation means, in particular automotive.

The invention shall be better understood from the following detailed description of particular embodiments provided by way of non-limiting example, with reference to the accompanying drawings, in which:
- figure 1 is a schematic section view of the coextruded material of the invention;
- figure 2 is an overall view of a suitcase according to the invention;
- figure 3 is a lateral section schematic view of a twin-screw extruder usable for the preparation of an SBS/PC mixture according to the invention;
- figure 4 is a schematic prospective view of a coextruder usable for the production of the multilayer material of the invention.

The polymeric material of the invention is a multilayer composite material, comprising at least one superficial layer of polycarbonate (PC) and at least one inner layer made of a mixture of acrylonitrile butadiene styrene (ABS) and polycarbonate comprising a plasticiser.

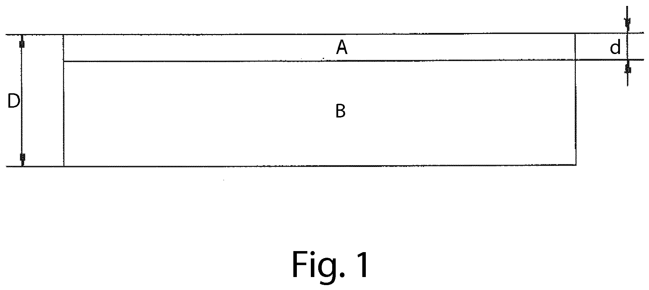

Figure 1 shows, by way of example, the enlarged section of a plate of the material of the invention, in which the reference letter A indicates the outer layer and B indicates the inner layer.

Polycarbonate is a thermoplastic polyester polymer of carbonic acid and a diol, with the general formula: 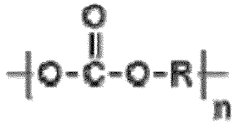 in which R is the diradical of a diol.

The mechanical properties, such as elongation, breaking load, impact resistance and flexural strength, show rapid increase with molecular weight until reaching a plateau for molecular weight values around 22 000, weight for which good workability for extrusion and moulding is still assured. Of fundamental importance for the purposes of the applications of polycarbonate is its high tenacity. The glass transition temperature is 150°C, high if compared to that of many other polymers. A high value of Tg is a symptom of dimensional stability as well as of a considerable fracture resistance under load; it also determines the maximum limit value of the operating temperature of the material for maintaining the properties.

For the use according to the invention, preferably, the diol is bisphenol A.

In preferred embodiments, the polycarbonate used both in the outer layer A and in the inner layer B, in this latter case in a mixture with ABS, has a number average molecular weight of approximately 20,000.

The polycarbonate used as a constituent of the outer layer A provides the material with high scratch resistance properties.

Acrylonitrile butadiene styrene or ABS (chemical formula (C₈H₈·C₄H₆·C₃H₃N)ₙ) is a thermoplastic polymer used to create light and rigid objects. ABS is a copolymer derived from styrene polymerised together with acrylonitrile in the presence of polybutadiene, and therefore it can be defined as a ter-polymer. The proportions can vary in the following way:
- from 15% to 35% of acrylonitrile,
- from 5% to 30% of butadiene, and
- from 40% to 60% of styrene.

For use in the material of the invention, ABS preferably has a number average molecular weight of approximately 70,000.

For the purposes of the invention, various types of plasticisers can be used, for example chosen among organic phosphates, phthalates, adipates, sebacates, fatty acid esters, glycerol esters. However, a compound that has demonstrated a surprising plasticising effect in the material of the invention is polybutadiene, in particular polybutadiene with number average molecular weight of approximately 20,000.

The term "plasticiser", as used in the present description and in the appended claims, means also a mixture of two or more plasticisers as defined above.

In preferred embodiments, the outer layer A is constituted by approximately 100% of PC. However, small quantities of additives can be present, in particular pigments, so as to provide the outer layer with a desired colour. The quantity of these additives falls within the normal percentages used for these substances.

In preferred embodiments, the inner layer B consists of an ABS/PC mixture in a weight ratio of between 25/75 and 35/65, more preferably approximately 30/70, and a plasticiser, more preferably polybutadiene, in a quantity between 1% and 3% by weight with respect to the weight of the ABS.

The multilayer composite material is coextruded to form plates. These plates preferably have a thickness D of between 1.9 mm and 2.5 mm.

In preferred embodiments, the d/D thickness ratio between outer layer A and inner layer B is between 0.17:1 and 0.23:1, more preferably approximately 0.2:1. The multilayer material of the invention can also comprise more than 2 layers up to 5 layers, while maintaining the total thickness D of 1.9-2.5 mm. The additional layers in addition to the outer layer A and inner layer B can consist of the same materials described above or also of different materials, preferably selected among those compatible with the inner layer B.

The material of the invention is a thermoplastic material that can be formed for moulding after softening so as to assume the desired shape of the item to be obtained.

It has been seen that a very important role in providing the material of the invention with high performance levels is played by the process for its fabrication.

Said method comprises:
i) a step of preparing a mixture of ABS/PC and plasticiser comprising extruding and pelletising a mixture of ABS, PC and plasticiser as defined above, and
ii) a step of coextruding the mixture of step i) with PC to form a plate of multilayer composite material according to the invention.

Step i) of preparing the mixture of ABS/PC and plasticiser comprises the following operating sub-steps:
a) drying ABS and PC as defined above in a dryer at temperatures above 80°C, preferably approximately 85°C, and for a time longer than 20 hours, preferably approximately 24 hours;
b) forming an ABS/PC mixture, preferably in a weight ratio between 25/75 and 35/65, and plasticiser, preferably in a quantity between 1% and 3% by weight relative to the weight of ABS;
c) mixing the mixture of step b) in a mixer, preferably a rotating mixer, preferably for a time between 5 and 10 minutes, until obtaining a uniform composition;
d) extruding the mixture obtained in step c), obtaining, after cooling, a mixture of ABS/PC and plasticiser in the form of pellets.

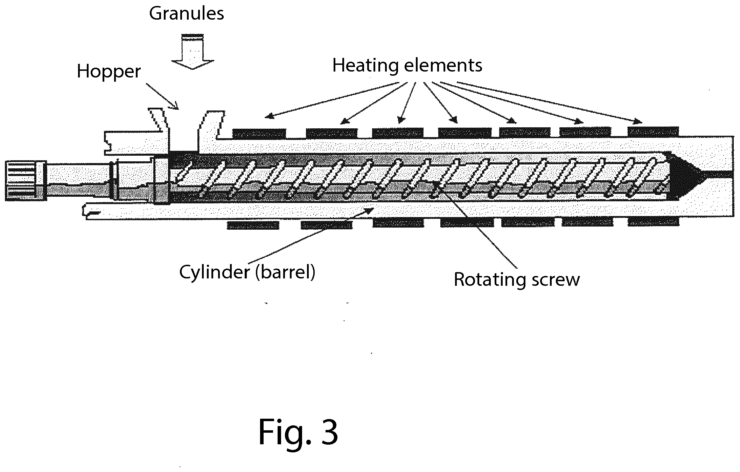

The extrusion sub-step d) preferably takes place in a co-rotating non co-penetrating twin screw extruder, preferably at the speed of 200 rpm and with a temperature profile in the extrusion cylinder ("barrel") from 220°C to 250°C. An example of this extruder is shown schematically in figure 3, where a single screw is visible, the other one being coupled to the first one on the same plane.

The drying sub-step a) has been found to be extremely important to provide the high performance of the material of the invention. In known processes of this type, drying is carried out at approximately 85°C for approximately 6 hours. Instead, it has been observed that it is essential to prolong said drying for a much longer time, i.e. no less than 20 hours and preferably approximately 24 hours.

Sub-step a) can be carried out on the ABS and PC polymers separately, or on an already formed mixture of the aforesaid polymers, possibly in the presence of the plasticiser. In this last case, then, the sub-steps a) and b) will be reversed.

Step ii) of coextruding the mixture of step i) with PC to form a plate of multilayer composite material comprises the following operating sub-steps:
a') extruding, by means of parallel flat head extruders, the mixture of ABS/PC and plasticiser of step i) and, separately, the PC, possibly containing additives such as pigments or the like;
b') depositing the coextruded layers on a rotating cylinder with controlled speed;
c') cooling the coextruded plate obtaining the coextruded multilayer material of the invention;
d') optionally, superficially finishing the coextruded multilayer material.

The coextruding sub-step a') can preferably be carried out with extruders operating at 200 rpm and with a temperature profile from 220°C to 250°C.

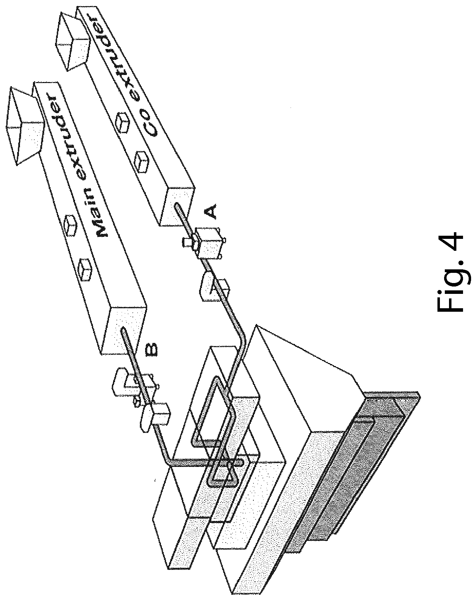

An example of a typical co-extrusion apparatus is shown schematically in figure 4.

In sub-step b') the rotational speed of the cylinder determines both the thickness and the draw ratio of the material. The rotational speed of the cylinder will preferably be between 5 and 10 rpm.

Obviously, thickness and draw ratio of the material combine with the properties dictated by the mixture in defining the final performance of the material.

The cooling sub-step c') preferably takes place in an environment with controlled temperature, so as to obtain slow and progressive cooling, preferably in a time of approximately 15 minutes. This slow cooling has also been found important for the obtainment of the final characteristics of the material.

In a preferred embodiment, the climate chamber will have an input temperature of approximately 150°C and an output temperature of approximately 50°C and it will preferably have intermediate portions in succession with temperatures respectively of approximately 125°C, 100°C and 75°C.

The sub-step d') can comprise one of the following operations:
1. polished, metallic, matte, satin finishing, etc.;
2. use a decorative roller at the output of the extruder that makes it possible to emboss an impression of various kinds on the surface of the plate, which can be customised through the use of different rollers.

### Strength test of the material of the invention

The table shows the average values of some mechanical properties of ABS, PC and PC/ABS (70/30) without the addition of a plasticising agent. Significant variations in the properties are observed; in particular, they increase when PC is added to the ABS, as could easily be intuited.

The extraordinary result is obtained when the plasticising agent is added to the mixture and the coextruded multilayer material is obtained.

The material obtained (bearing the CARPISA GOTECH™ trademark) presents, as can be observed in the table, markedly superior mechanical properties compared both to ABS and to pure polycarbonate.

The material according to the invention has impact resistance that is higher than 100 KJ/m², preferably than approximately 150 KJ/m².

| | IMPACT RESISTANCE [KJ/m²] | BENDING RESISTANCE [MPa] | ELONGATION AT BREAK [%] | TENSILE STRENGTH [MPa] |
|---|---|---|---|---|
| ABS | 40 | 55 | 15 | 37 |
| PC | 88 | 80 | 63 | 62 |
| Blend PC/ABS | 75 | 74 | 30 | 55 |
| CARPISA GOTECH™ | 150 | 93 | 71 | 70 |

The results obtained allow using a material that, for equal performance levels, contains 25% of a material that is less valuable and more economical, thus allowing not only to reduce costs, but above all to increase the mechanical properties of both individual components.

The better result is obtained upon considering impact resistance which is markedly superior not only with respect to that of the mixture without the addition of the plasticising agent, but even to that of pure PC. This parameter takes on considerable significance in the field of application of the material according to the invention.

### Tests in the field of luggage

At the Carpisa Lab, an ISO9001 certified research and development laboratory, as well as luggage design and testing laboratory, numerous samples of rigid suitcases were produced using Carpisa Gotech™. Multiple impact tests were then carried out on each of the sizes S, M, L and XL, using the Tumble Test machine, which is specifically used in the luggage sector. All samples were rigorously tested with an internal load respectively of: 20kg (for size S), 25 kg (for size M), 30kg (for size L), 35kg (for size XL).

The result was surprising: normally, the resistance of suitcases made of ABS does not exceed 150 complete cycles, while for PC suitcases it does not exceed 200 cycles. The suitcases produced with the material according to the invention, commercially branded Carpisa Gotech™, did not reach their breaking point up to 1,000 Tumble Test cycles. Thereafter, the drop resistance test was conducted, from a height of 15 mt. Also in this case, the breakage, i.e. a "crack" with a minimum length of 5 mm in any point of the suitcase, was observed only upon being dropped X times under the same conditions of internal load of the suitcase:
- Size S: breakage at the 6th drop from a height of 15 mt
- Size M: breakage at the 5th drop from a height of 15 mt
- Size L: breakage at the 5th drop from a height of 15 mt
- Size XL: breakage at the 4th drop from a height of 15 mt.

In addition, the suitcases, subjected without internal load (i.e. empty) to a weight of approximately 100 kg applied exteriorly, exhibited a "crumpling" deformation which, upon eliminating the cause, disappeared. In other words, the suitcases return to their original shape without exhibiting any defect.

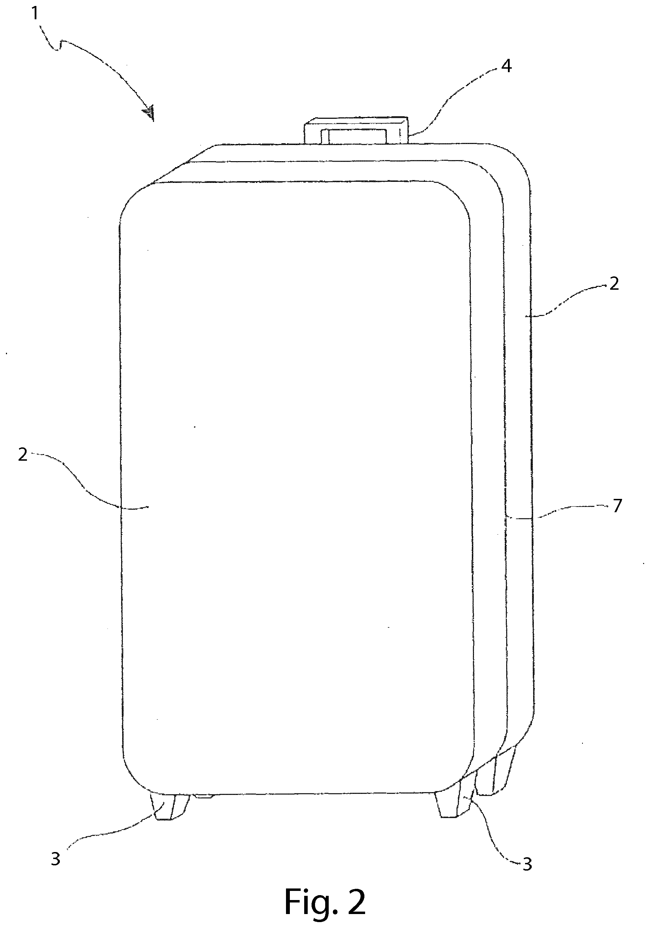

Figure 2, by way of example, shows a rigid suitcase, indicated in its entirety by the numeral 1, obtainable with the coextruded multilayer material according to the invention. In the specific example shown, without thereby introducing any limitation, the suitcase 1 is a trolley and comprises a pair of wheels 3 and a handle 4.

The suitcase 1 comprises a main structure consisting of two half-shells 2, rotatably articulated with each other and able to define a closed structure that delimits a containment space. The suitcase 1 further comprises a closing device adapted to prevent/allow a relative rotation of said half shells 2. In certain embodiments, the closing device is a zipper 7 that joins the two half shells 2 along the respective edges, typically to reach in proximity to the articulation system. In other embodiments, the closing device is a lock, in lieu of or in addition to the zipper.

The two half shells 2 that constitute the structure of the suitcase 1 of the invention are made of the material described above.

The material according to the invention consists of multilayer whose outer layer consists of 100% PC and the inner layer is made of a PC/ABS mixture with percentages of 70% and 30% by weight respectively charged with a plasticising agent, in particular polybutadiene with number average molecular weight of approximately 3,000, in a percentage of 3% by weight relative to the ABS component. With regard to the values shown in the table, they refer to a multilayer in which the outer layer of polycarbonate constitutes 20% of the total thickness.

The results are summarised in the following table:

| | **IMPACT RESISTANCE [KJ/m²** | **BENDING RESISTANCE [Mpa]** | **ELONGATION AT BREAK [%]** | **TENSILE STRENGTH [Mpa]** |
|---|---|---|---|---|
| **100% ABS** | 40 | 55 | 15 | 37 |
| **100% PC** | 88 | 80 | 63 | 62 |
| **70-30% PC/ABS Blend** | 75 | 74 | 30 | 55 |
| **CARPISA GOTECH**™ | 150 | 93 | 71 | 70 |

The resulting values were compared by testing specimens of equal dimensions for all tested materials.

The dimensioning of the samples with which the tests were carried out is as follows:
Traction/Bending Test: Rectangular specimen of 150mm x 40mm with a thickness of 2mm;
Impact resistance: Rectangular specimen of 80mm x 10mm with a thickness of 4mm.

It was therefore observed that the plasticising agent was decisive to improve these mechanical properties (above all, impact resistance), which is an absolutely surprising finding, since from the prior art it was believed that the plasticising agent was solely useful to improve the rheological properties of the blend, and hence with an entirely different function.

The coextruded multilayer material according to the invention can be used, in addition to the luggage field - in the fabrication of suitcases of various sizes, beauty cases, trunks, etc. - also for the fabrication of containers of various types.

Another possible use for the material of the invention is in the sector of means of transportation, in particular for the fabrication of parts for which high impact resistance is required, for example bumpers, fender profiles, internal parts of the passenger compartment, etc.

From the above description, the advantages of the material according to the invention are clear; said material couples high mechanical performance (in particular, impact resistance) with a modest cost thanks to the use of a significant percentage of a low cost material like ABS.

Obviously, a person skilled in the art, to satisfy contingent and specific needs, may make numerous modifications and variants to the invention described above, without thereby departing from the scope of protection of the present invention, as defined by the following claims.

## Claims

1. A coextruded multilayer composite material, comprising at least one superficial layer (A) of polycarbonate (PC) and at least one inner layer (B) made of a mixture of acrylonitrile-butadiene-styrene (ABS) and polycarbonate comprising a plasticiser.

2. Material according to claim 1, wherein the polycarbonate is a polymer of carbonic acid and bisphenol A having a number average molecular weight of approximately 20,000.

3. Material according to claim 1 or 2, wherein in the acrylonitrile-butadiene-styrene copolymer the proportions between acrylonitrile, butadiene and styrene vary in the following way:
- from 15% to 35% of acrylonitrile,
- from 5% to 30% of butadiene, and
- from 40% to 60% of styrene.

4. Material according to any one of the claims from 1 to 3, wherein the ABS has a number average molecular weight of approximately 70,000.

5. Material according to any one of the claims from 1 to 4, wherein the plasticiser is polybutadiene, preferably polybutadiene with number average molecular weight of approximately 20,000.

6. Material according to any one of the claims from 1 to 5, wherein the superficial layer (A) consists of approximately 100% of PC and optionally comprises, in addition, one or more pigments.

7. Material according to any one of the claims from 1 to 6, wherein the inner layer (B) consists of an ABS/PC mixture in a weight ratio between 25/75 and 35/65, preferably approximately 30/70, and said plasticiser in a quantity, by weight, between 1% and 3% relative to the weight of the ABS.

8. Material according to any one of the claims from 1 to 7, wherein said material is in the form of plates having a thickness (D) between 1.9 mm and 2.5 mm and wherein the thickness ratio d/D between superficial layer (A) and inner layer (B) is between 0.17:1 and 0.23:1, preferably approximately 0.2:1.

9. Material according to any one of the claims from 1 to 8, having an impact resistance above 100 KJ/m², preferably approximately 150 KJ/m².

10. Item manufactured with the material according to any one of the claims from 1 to 9.

11. Item according to claim 10, wherein said item is a container.

12. Item according to claim 11, wherein said container is a luggage article.

13. Item according to claim 10, wherein said item is a part of a means of transportation.

14. Process for manufacturing the material according to any one of the claims from 1 to 9, comprising:
i) a step of preparing a mixture of ABS/PC and plasticiser comprising extruding and pelletising a mixture of ABS, PC and plasticiser as defined above, and
ii) a step of coextruding the mixture of step i) with PC to form a plate of multilayer composite material.

15. Process according to claim 14, wherein step i) of preparing the mixture of ABS/PC and plasticiser comprises the following operating sub-steps:
a) drying ABS and PC in a dryer at temperatures above 80°C, preferably approximately 85°C, and for a time longer than 20 hours, preferably approximately 24 hours;
b) forming an ABS/PC mixture, preferably in a weight ratio between 25/75 and 35/65, and plasticiser, preferably in a weight quantity between 1% and 3% relative to the weight of ABS;
c) mixing the mixture of step b) in a mixer, preferably a rotating mixer, preferably for a time between 5 and 10 minutes, until obtaining a uniform composition;
d) extruding the mixture obtained in step c), obtaining, after cooling, a mixture of ABS/PC and plasticiser in the form of pellets.

16. Method according to claim 15, wherein sub-step a) is carried out on the ABS and PC polymers separately, or on an already formed mixture of the aforesaid polymers, possibly in the presence of the plasticiser.

17. Process as claimed in claim 15 or 16, wherein the extrusion sub-step d) takes place in a co-rotating non co-penetrating twin screw extruder, preferably at the speed of 200 rpm and with a temperature profile in the extrusion cylinder from 220°C to 250°C.

18. Process as claimed in any of the claims from 14 to 17, wherein step ii) of coextruding the mixture of step i) with PC to form a plate of multilayer coextruded composite material comprises the following operating sub-steps:
a') extruding, by means of parallel flat head extruders, the mixture of ABS/PC and plasticiser of step i) and, separately, the PC, optionally containing additives such as pigments or the like;
b') depositing the coextruded layers on a rotating cylinder with controlled speed;
c') cooling the coextruded plate obtaining the coextruded multilayer composite material;
d') optionally, superficially finishing the coextruded multilayer composite material.

19. Process according to claim 18, wherein:
- the coextruding sub-step a') is carried out with extruders operating at 200 rpm and with a temperature profile from 220°C to 250°C, and/or
- in sub-step b') the rotational speed of the rotating cylinder is between 5 and 10 rpm, and/or
- the cooling sub-step c') takes place in an environment with controlled temperature, preferably in a time of approximately 15 minutes, preferably in a climate chamber having an input temperature of approximately 150°C and an output temperature of approximately 50°C and preferably having intermediate portions in succession with temperatures respectively of approximately 125°C, 100°C and 75°C.
